## Europäisches Patentamt

## European Patent Office

## Office européen des brevets

(11) Veröffentlichungsnummer: **0 171 119**
**B1**

(12) **EUROPÄISCHE PATENTSCHRIFT**

(45) Veröffentlichungstag der Patentschrift:
**20.04.88**

(21) Anmeldenummer: **85201251.7**

(22) Anmeldetag: **30.07.85**

(51) Int. Cl.⁴: **B 41 J 3/04**, B 23 P 15/16

(54) Vorrichtung und Verfahren zur Herstellung einer Düsenplatte für Tintenstrahldrucker.

(30) Priorität: **10.08.84 DE 3429496**

(43) Veröffentlichungstag der Anmeldung:
**12.02.86 Patentblatt 86/7**

(45) Bekanntmachung des Hinweises auf die Patenterteilung:
**20.04.88 Patentblatt 88/16**

(84) Benannte Vertragsstaaten:
**DE FR GB IT SE**

(56) Entgegenhaltungen:
**DE - A - 3 042 483**
**DE - A - 3 326 580**

(73) Patentinhaber: **Philips Patentverwaltung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB IT SE**

(72) Erfinder: **Kronenberg, Horst Günter,
Kleingartenverein 315 Pazelle 224,
D-2000 Hamburg 54 (DE)**

(74) Vertreter: **Koch, Ingo, Dr.-Ing. et al, Philips
Patentverwaltung GmbH
Wendenstrasse 35 Postfach 10 51 49,
D-2000 Hamburg 1 (DE)**

## Beschreibung

Die Erfindung bezieht sich auf eine Vorrichtung zur Herstellung einer Düsenplatte für Tintenstrahldrucker und dergl., mit einem die inneren Abmessungen der Düse aufweisenden Präge- und Stanzstempel, durch den die Düse durch eine kreisförmige Öffnung einer Prägematrize hindurch in einer Metallplatte gestreckt und unter weiterer Streckung zur Düsenöffnung gestanzt wird, wobei der Metallplatte auf der dem Stempel abgekehrten Seite eine Metallfolie unterlegt ist, die aus einem gegenüber der Metallplatte härteren Material ohne mechanische Vorzugsrichtung besteht.

Vorrichtungen zur Herstellung von Düsenplatten für Tintenstrahldrucker sind aus der DE-OS 3 042 483 bekannt. Bei der Durchführung eines Verfahrens nach dieser Veröffentlichung hat sich gezeigt, dass die Qualität der austrittsseitigen Düsenränder stark von der Oberflächenstruktur des Materials für die Düsenplatte abhängig ist. Ist diese Materialstruktur nicht sehr homogen, so reissen beim Durchstanzen der Düsenöffnung die Ränder ungleichmässig ab, was zu unsymmetrischen bzw. rauhen Düsenrändern führt.

Zur Verbesserung der Qualität der Düsenränder wurde in diesem Zusammenhang vorgeschlagen, beim Prägen und Stanzen der Düsenplatte auf der dem Stanzstempel abgelegenen Seite der Düsenplatte eine Metallfolie zu unterlegen, die aus einem gegenüber der Metallplatte härteren Material ohne mechanische Vorzugsrichtung besteht. Die Metallfolie aus amorphem Material kann aus Eisen bestehen. Die Prägung der Düsen erfolgt unter Verwendung einer solchen Metallfolie, vorzugsweise gegen einen hartplastischen Block, z.B. Blei.

Will man die Tropfen verfeinern und die Ausstossgeschwindigkeit, also insgesamt gesehen die Qualität der Schrift und die Schreibgeschwindigkeit von Tintenstrahldruckern weiter verbessern, so kommt es darauf an, dass die Düsenöffnungen mit ihren Düsenrändern sehr genau ausgebildet sind und einen sehr gut definierten Rand mit glatter Oberfläche haben.

Der Erfindung liegt die Aufgabe zugrunde, eine Vorrichtung anzugeben, mit der Düsenplatten für Tintenstrahldrucker hergestellt werden, die im Sinne der vorstehenden Ausführungen verbessert sind. Erreicht wird dies erfindungsgemäss dadurch, dass der in den Abmessungen der Düse ausgeformte Präge- und Stanzstempel stirnseitig gegenüber dem Durchmesser der Düsenöffnung angespitzt ist.

Durch das Anspitzen des stirnseitigen Endes des Stanzstempels wird dieser während des Prägevorganges nach Art eines Körners im Material geführt, so dass er seitlich nicht auswandern und dadurch die Prägung asymmetrisch gestalten kann. Wenn die Grössen einer solchen Auswanderung auch sehr klein sind, so sind sie doch bei den hohen Anforderungen an Präzision zu berücksichtigen. Vorteilhaft ist es, die Anspitzung kegelstumpfförmig mit vorzugsweise gekehlten Flanken auszubilden, weil sich dadurch ein besonders guter Materialfluss über einen weiten Bereich der Prägung der Düse ergibt.

Mit einer Vorrichtung der beanspruchten Bauart wird bei der Herstellung der Düsenplatte bevorzugt ein Verfahren benutzt, bei dem die Formung und Streckung der Düse in der bereits vorgeschlagenen Art und Weise in einem ersten Zug mit der untergelegten amorphen Metallfolie erfolgt.

Die untergelegte Materialfolie wird dann abgenommen und die eigentliche Düsenöffnung durch Stanzen in einem Nachzug, vorzugsweise gegen Luft, gebildet.

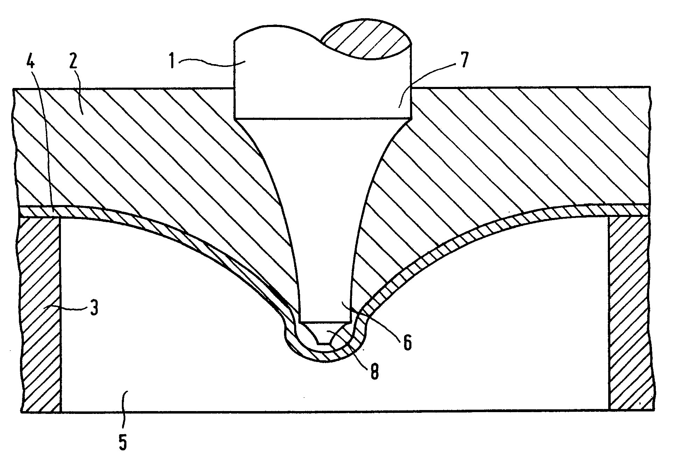

Anhand der Zeichnung sei eine Vorrichtung nach der Erfindung beschrieben.

Die Figur zeigt in schematischer Darstellung einen Präge- und Stanzstempel 1, der gemäss der Zeichnung in die Düsenplatte 2 zur Formung einer Düse eingedrückt ist. Zwischen der Düsenplatte 2 und der Prägematrize 3, die eine zylindrische Öffnung 5 hat, ist eine Metallfolie 4 eingelegt, die aus einem gegenüber der Düsenplatte 2 härteren Material ohne mechanische Vorzugsrichtung besteht. Als Material kommt amorphes Metall, z.B. Eisen, mit einer Dicke von z.B. 20 μ in Betracht. In die Öffnung 5 der Prägematrize 3 kann eine hartplastische Unterlage, z.B. Blei, eingesetzt sein. Der Stanzstempel 1 ist zwischen der Kante 6 und dem Stempelansatz 7 in der gewünschten Düsenform gestaltet. Die Kante 6 mit einem Durchmesser von ca. 50 μ bestimmt den späteren Öffnungsdurchmesser der Düse. An der Kante 6 ist stirnseitig der Stanzstempel mit einer Anspitzung 8 versehen, die den Stempel während des Präge- und Ziehvorganges in der Düsenplatte nach Art eines Körners führt. Aus der Figur ist der Moment zu ersehen, zu dem die Düse fertig geprägt ist.

Nach Abschluss dieses Prägevorganges wird der Stempel 1 zurückgefahren, dann die Folie 4 entfernt und schliesslich die Düsenplatte 2 durch einen weiteren Stanzzug im Bereich der Kante 6 durchstossen.

Das Öffnen der Düse bei diesem zweiten Zug bedarf nur eines relativ geringen zusätzlichen Hubes, weil im Bereich der Kante 6 das Material der Düsenplatte ohnehin schon sehr stark geschwächt ist. Mit der erfindungsgemässen Vorrichtung lassen sich sehr gute gleichmässige Düsen herstellen.

## Patentansprüche

1. Vorrichtung zur Herstellung einer Düsenplatte für Tintenstrahldrucker und dgl., mit einem die inneren Abmessungen einer Düse aufweisenden Präge- und Stanzstempel, durch den die Düse durch eine kreisförmige Öffnung einer Prägematrize hindurch in einer Metallplatte gestreckt und unter weiterer Streckung zur Düsenöffnung gestanzt wird, wobei der Metallplatte auf der dem Stempel abgekehrten Seite eine Metallfolie unterlegt ist, die aus einem gegenüber der Metallplatte härteren Material ohne mechanische Vorzugsrichtung besteht, dadurch gekennzeichnet, dass der in den Abmessungen der Düse ausgeformte Präge- und Stanzstempel stirnseitig gegenüber dem Durchmesser der Düsenöffnung angespitzt ist.

2. Vorrichtung nach Anspruch 1, dadurch gekennzeichnet, dass die Anspitzung im wesentlichen kegelstumpfförmig mit vorzugsweise gekehlten Flanken ausgebildet ist.

3. Verfahren zur Herstellung einer Düsenplatte mit einer Vorrichtung nach Anspruch 1 oder 2, dadurch gekennzeichnet, dass die Formung und Streckung der Düse in einem ersten Zug erfolgt, dann die Metallfolie abgenommen und die Düsenöffnung durch einen Nachzug gestanzt wird.

**Claims**

11. A device for producing a nozzle plate for ink jet printers and the like, comprising a pressing and stamping die whose dimensions correspond to the inner dimensions of a nozzle and by which the nozzle is pressed, through a circular opening of a press mould, into a metal plate and, whilst being further pressed, the nozzle opening is stamped, a metal foil made of a material harder than that of the metal plate and not having a preferred mechanical orientation underlying the metal plate on the side remote from the die, characterized in that the pressing and stamping die whose dimensions correspond to those of the nozzle is pointed at the side of its end face with respect to the diameter of the nozzle opening.

2. A device as claimed in Claim 1, characterized in that the pointed part is shaped essentially as a truncated cone preferably having grooved sides.

3. A method of manufacturing a nozzle plate by means of a device as claimed in Claim 1 or 2, characterized in that the nozzle is formed and pressed in a first step, after which the metal foil is removed and the nozzle opening is stamped in an aftertreatment.

**Revendications**

1. Dispositif de fabrication d'une plaque à tuyère pour des imprimantes à jet d'encre et d'autres appareils du même genre, muni d'un outil d'estampage et de poinçonnage ayant des dimensions correspondant aux dimensions intérieures de la tuyère et par lequel la tuyère est formée par une étape d'emboutissage dans une plaque métallique, à travers une ouverture circulaire d'une matrice d'estampage, et par une étape d'emboutissage supplémentaire et de poinçonnage pour former l'orifice de la tuyère, alors qu'au-dessous de la plaque métallique, du côté opposé audit outil, est située une feuille métallique constituée d'un matériau plus dur que celui de la plaque métallique et ne présentant pas une orientation mécanique préférentielle, caractérisé en ce que, du côté de sa face terminale, l'outil d'estampage et de poinçonnage dont les dimensions correspondent aux dimensions de la tuyère, est pointu par rapport au diamètre de l'orifice de tuyère.

2. Dispositif selon la revendication 1, caractérisé en ce que la partie pointue affecte essentiellement la forme d'un tronc de cône ayant de préférence des flancs cannelés.

3. Procédé de fabrication d'une plaque à tuyère au moyen d'un dispositif selon la revendication 1 ou 2, caractérisé en ce que la formation et l'emboutissage de la tuyère sont effectués dans une première étape et en ce qu'ensuite, la feuille métallique est enlevée et l'ouverture de tuyère est percée dans une étape finale.